# EUROPEAN PATENT APPLICATION

(11) **EP 4 311 017 A1**
(43) Date of publication of application: **24.01.2024**
(21) Application number: 22822833.4
(22) Date of filing: 20.10.2022
(51) Int. Cl.: H01M 50/559, H01M 50/567

(54) **INTERNAL BATTERY TERMINAL CONNECTION STRUCTURE AND BATTERY**

(30) Priority: 09.06.2022 CN 202221432896 U
(71) Applicant: Eve Power Co., Ltd., Jingmen, Hubei 448000 (CN)
(72) Inventor: HUANG, Liming, Jingmen, Hubei 448000 (CN)
(74) Representative: Murgitroyd & Company
(86) International application number: PCT/CN2022/126314
(87) International publication number: WO 2023/236410

(57) **Abstract**

An internal connection structure of a battery terminal and a battery, the internal connection structure of the battery terminal includes a a roll core, a first current collector, and a snapping portion. The roll core is provided with a first electrode tab and a second electrode tab. The first current collector is connected to the first electrode tab, and the first current collector is provided with a hole. The snapping portion is disposed on an inner side of the battery terminal, the snapping portion is snapped through the hole, the battery terminal passes through the hole and is snapped and assembled with the first current collector through the snapping portion, and the battery terminal is configured to enable a positive end of the roll core extend outwards.

## Description

### Cross Reference to Related Applications

The present disclosure claims priority to Chinese Patent Application Serial No. 202221432896.7 filed on June. 9, 2022. The content of the aforementioned application is incorporated herein by reference.

### Technical Field.

The present disclosure relates to the field of battery technology, and, more particularly, to an internal connection structure of a battery terminal and a battery.

### Background of the Disclosure

As power source of electric vehicles, batteries have become one of key components of the electric vehicles. When a first current collector of the battery is connected to a pole post in relevant technologies, it is usually used to provide a hole in a central area of a top of the battery to integrate a battery terminal. During a cell assembly process, a positive end of a roll core extends upwards to connect with the battery terminal in a central area of a top of the battery case. In general, the welding equipment components are inserted by the middle hole of the roll core, so that the current collector plate and the roll core are connected by welding. Alternatively, a through hole is provided at an end surface of the pole post, and a protrusion portion in a middle of the first current collector inserts into the through hole to connect the pole post, and then they are welt once fit. At a negative end, a negative current collecting plate is connected to an end of a cover plate, and the cover plate is electrically connected to a steel shell. Through the above, positive and negative outputs are achieved.

However, when the welding equipment components pass through the middle hole of the roll core, metal spatter and high-temperature melts are generated during welding process, which may melt through a diaphragm or remain between electrodes, causing a degradation in electrical performance and even safety risks. In addition, if the current collector plate is connected to the pole post via the through hole and then welded, there is possibility of welding cracks. In a process of battery charging and discharging, when temperature of the pole post changes, leakage may appear at the welding crack location.

### Summary of the Disclosure

An internal connection structure of a battery terminal and a battery are provided in the present disclosure, which does not need to use laser welding or resistance welding to realize an internal electrical connection of the battery terminal, and avoids internal short circuit or excessive self-discharge of the battery caused by spatter and metals when welding inside the battery. The internal connection structure of the battery terminal provides a convenient and reliable internal connection of the battery terminal, and improves the safety of the battery when used in the battery

In a first aspect, an internal connection structure of a battery terminal includes:

a roll core, wherein the roll core is provided with a first electrode tab and a second electrode tab; a first current collector, wherein the first current collector is connected to the first electrode tab, and the first current collector is provided with a hole; and a snapping portion, wherein the snapping portion is disposed on an inner side of the battery terminal, the snapping portion passes through the hole and is snapped with the hole, the battery terminal passes through the hole and assembled with the first current collector via the snapping portion, and the battery terminal is configured to enable a positive end of the roll core extend outwards. In an embodiment, the snapping portion includes a riveting protrusion portion.

In an embodiment, the riveting protrusion portion is provided with a riveting notch, and the riveting notch is configured to separate the riveting protrusion portion into a plurality of independent riveting protrusion.

In an embodiment, the snapping portion includes a snapping protrusion portion.

In an embodiment, the snapping protrusion portion includes a first snapping protrusion and a second snapping protrusion, a first end of the first snapping protrusion is fixedly connected to the inner side of the battery terminal, and a second end of the first snapping protrusion is fixedly connected to the second snapping protrusion, an end face of the second snapping protrusion away from the battery terminal is an aligning inclined surface, an end face of the second snapping protrusion close to the battery terminal is a snapping surface, and the snapping surface abuts against the first current collector.

In an embodiment, a distance between the snapping surface and an inner end face of the battery terminal is approximately the same as a thickness of the first current collector.

In an embodiment, an end face of the snapping protrusion portion away from the battery terminal is provided with an elastic deformation groove.

In a second aspect, a battery is provided in the embodiments of the present disclosure, including the internal connection structure of the battery terminal as defined above.

In an embodiment, the battery further includes:
a battery case;
the battery terminal;
a terminal insulating part and an internal insulating part disposed between the battery terminal and the battery case, wherein the terminal insulating part is located outside the battery case, the internal insulating part is located inside the battery case, the battery terminal is connected to the internal connection structure of the battery terminal, and the battery terminal is configured to enable the positive end of the roll core extend outwards; and
a second current collector, wherein the second current collector is connected to the second electrode tab and an inner part of the battery case respectively, and the battery case is configured to enable a negative end of the roll core extend outwards.

In an embodiment, the battery terminal includes a first pole post, the first pole post is designed to pass through a through hole defined on an end of the battery case;
an inner side of the first pole post is provided with a riveting flange, and the battery terminal is configured to pass through the through hole and to be riveted and assembled with the battery case via the riveting flange to fix the first terminal with the battery case.

In an embodiment, the first pole post is provided with a riveting turnover groove adjacent to the riveting flange, and the riveting turnover groove is located at a side of the riveting flange close to a center of the first pole post.

In an embodiment, an end of the battery case away from the battery terminal is provided with an opening, and the cover plate is disposed at a position of the opening.

In an embodiment, an internal wall of the opening extends toward outside of the battery case with a supporting portion, the supporting portion is configured to support the cover plate, the supporting portion is connected to a crimping portion, and the crimping portion is configured to press the cover plate on the supporting portion.

In an embodiment, the battery further includes a sealing ring disposed at a gap between the cover plate and the opening.

In an embodiment, the cover plate is provided with an explosion-proof valve body structure, and the explosion-proof valve body structure is coaxial with the battery.

### Beneficial effects according to the present disclosure:

In the internal connection structure of the battery terminal in the present disclosure, the hole in a middle of the first current collector of the roll core is assembled with the snapping portion on the inner side of the battery terminal. The snapping portion enables the first current collector to be snapped with the battery terminal to achieve electrical connection. This does not need to use laser welding or resistance welding to achieve electrical connection inside the battery terminal, so as to avoid internal short circuit or excessive self-discharge of the battery caused by spatter and metals when welded inside the battery. The connection is convenient and reliable, and the safety of the battery is improved when used in the battery.

The battery is also provided in the present disclosure. The internal connection structure of the battery terminal makes the first current collector connected to the battery terminal through the snapping portion to achieve electrical connection. This does not need to use laser welding or resistance welding to achieve electrical connection inside the battery terminal, so as to avoid internal short circuit or excessive self-discharge of the battery caused by spatter and metals caused by welding inside the battery. The connection is convenient and reliable, and the safety of the battery comprising the connection is improved.

### Brief Description of the Drawings

FIG. 1 is a schematic sectional diagram of a battery terminal and a first current collector before riveting in an internal connection structure of the battery terminal provided in a first embodiment of the present disclosure.
FIG. 2 is a schematic sectional diagram of the battery terminal and the first current collector before riveting in the internal connection structure of the battery terminal provided in the first embodiment of the present disclosure.
FIG. 3 is a schematic structural diagram of the battery terminal and the first current collector before riveting in the internal connection structure of the battery terminal provided in the first embodiment of the present disclosure.
FIG. 4 is a schematic sectional diagram of the battery terminal and the first current collector after riveting in the internal connection structure of the battery terminal provided in the first embodiment of the present disclosure.
FIG. 5 is a schematic sectional diagram of the battery terminal and the first current collector after riveting in the internal connection structure of the battery terminal provided in the first embodiment of the present disclosure.
FIG. 6 is a schematic structural diagram of the battery terminal and the first current collector after riveting in the internal connection structure of the battery terminal provided in the first embodiment of the present disclosure.
FIG. 7 is a schematic sectional diagram of the battery terminal and a battery case of the battery before riveting provided in a second embodiment of the present disclosure.
FIG. 8 is a schematic sectional diagram of the battery terminal and a battery case of the battery after riveting provided in the second embodiment of the present disclosure.
FIG. 9 is a schematic sectional diagram of the battery in a third embodiment of the present disclosure.
FIG. 10 is a schematic partially enlarged diagram of A in FIG. 9.
FIG. 11 is a schematic partially enlarged diagram of B in FIG. 9.
FIG. 12 is a schematic structural diagram of a snapping protrusion portion in the internal connection structure of the battery terminal provided in a fourth embodiment of the present disclosure.
FIG. 13 is a schematic partially enlarged diagram of C in FIG. 12.

### Reference numerals:

1, roll core; 11, first electrode tab; 12, second electrode tab; 2, first current collector; 21, positive insulating part; 3, snapping portion; 31, riveting protrusion portion; 311, independent riveting protrusions; 312, riveting notch; 32, snapping protrusion portion; 321, first snapping protrusion; 322, second snapping protrusion; 3221, guide surface; 3222, snapping surface; 323, elastic deformation groove; 4, battery terminal; 41, first pole post; 411, riveting turnover groove; 42, first connecting bump; 43, concave hole; 5, battery case; 51, cover plate; 511, explosion-proof valve body structure; 52, supporting portion; 53, crimping portion; 54, sealing ring; 55, second connecting groove; 56, buckling groove; 57, third connecting groove; 6, terminal insulating part; 61, first connecting groove; 62, second connecting bump; 63, buckling portion; 7, internal insulating part; 71, third connecting bump; 8, second current collector; 9, riveting flange.

### Detailed Description of the Embodiments

In the present disclosure, unless otherwise specified and defined, terms "connect", "contact" and "fix" should be understood in a broad sense, for example, it may be a fixed connection, a detachable connection, or made as a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present disclosure can be understood according to situations.

In the present disclosure, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

In the description of this embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, terms "first" and "second" are only used to distinguish in terms of description and have no special meanings.

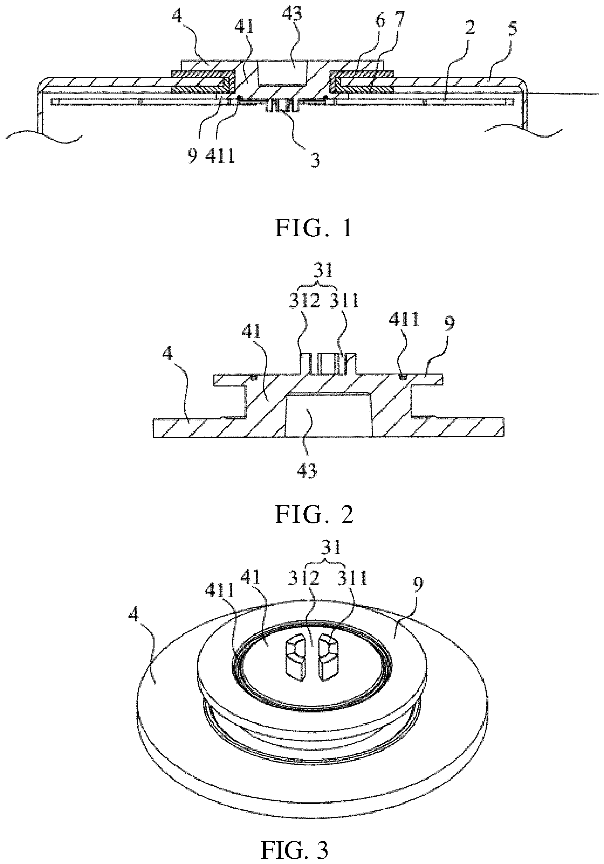

The technical solution of the present disclosure will be further described in combination with FIGs. 1 to 13 and through specific embodiments.

### A first embodiment:

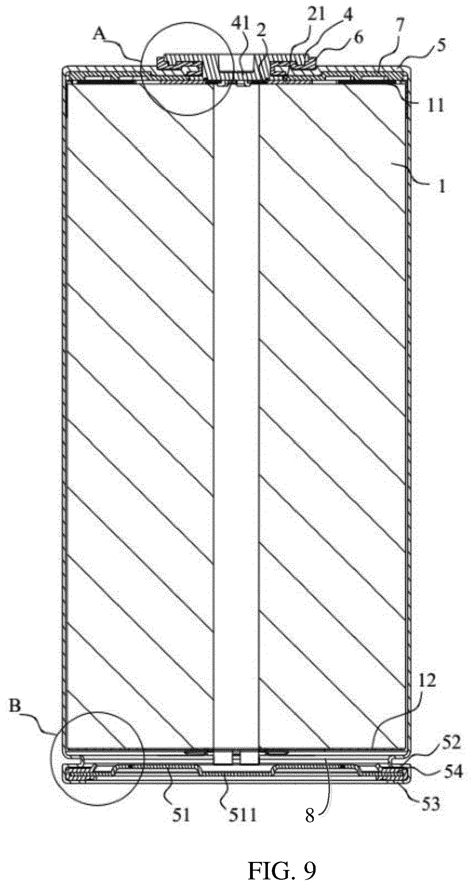

As shown in FIG. 1 and FIG. 9, an internal connection structure of a battery terminal is provided in the embodiment, including a roll core 1, a first current collector 2, and a snapping portion 3. The roll core 1 is provided with a first electrode tab 11 and a second electrode tab 12. The first current collector 2 is connected to the first electrode tab 11, and the first current collector 2 is provided with a hole. The snapping portion 3 is disposed on an inner side of the battery terminal 4. The snapping portion 3 passes through the hole and is riveted with the hole. The battery terminal 4 passes through the hole and is snapped and assembled with the first current collector 2 via the snapping portion 3. The battery terminal 4 is configured to enable a positive end of the roll core 1 extend outwards. The open pole in a middle of the first current collector 2 is assembled with the snapping portion 3 inside the battery terminal 4, and the first current collector 2 and the battery terminal 4 are snapped and connected by clamping to realize electrical connection. In this embodiment, the inner side refers to a side facing the roll core 1, and an outer side refers to a side away from the roll core 1.

In an embodiment, as shown in FIG. 1, FIG. 2, and FIG. 3, the battery terminal 4 includes a first pole post 41 located on the inner side. The snapping portion 3 includes a riveting protrusion portion 31. The riveting protrusion portion 31 is disposed on an end surface of the first pole post 41. The riveting protrusion portion 31 may be a hollow cylinder, or may be provided with a riveting notch 312. The riveting notch 312 divides the riveting protrusion portion 31 into a plurality of independent riveting protrusions 311.

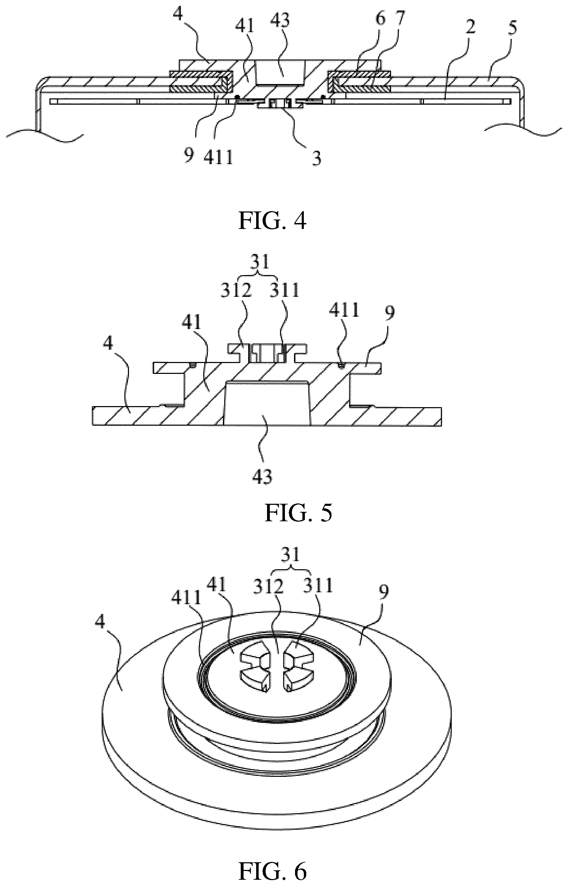

As shown in FIG. 4, FIG. 5, and FIG. 6, in this embodiment, the riveting protrusion portion 31 is provided with four riveting notches 312, and the riveting protrusion portion 31 is divided into four independent riveting protrusions 311 arranged at even intervals. The middle of the first current collector 2 is provided with the open pole. The riveting protrusion portion 31 passes through the open pole and is riveted with the open pole. The battery terminal 4 passes through the open pole and is riveted and assembled with the first current collector 2 by the riveting protrusion portion 31. The single riveting protrusion portion 311 is folded outwards under an action of an external force to form riveting. And the battery terminal 4 is configured to enable the positive end of the roll core 1 extend outwards

Implementation principle of the internal connection structure of the battery terminal in this embodiment is introduced below: the hole in the middle of the first current collector 2 is assembled with the snapping portion 31 on the inner side of the battery terminal 4. The first current collector 2 is connected to the battery terminal 4 by riveting and snapping to achieve electrical connection. This does not need to use laser welding or resistance welding to achieve electrical connection inside the battery terminal, so as to avoid internal short circuit or excessive self-discharge of the battery caused by spatter and metals welded inside the battery. The connection is convenient and reliable, and use safety of the battery is improved.

### A second embodiment:

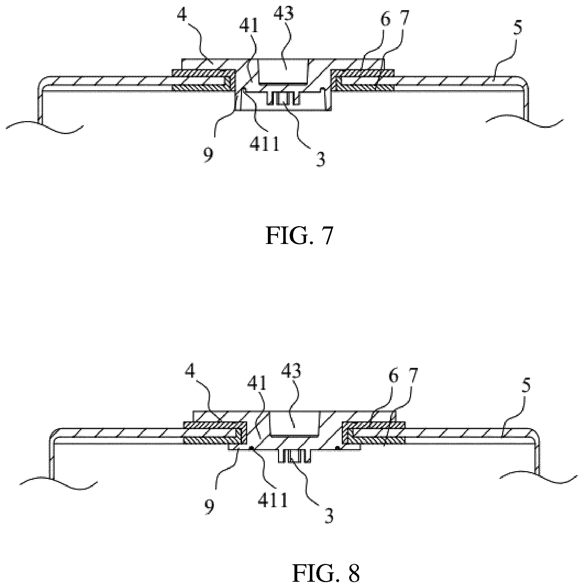

As shown in FIG. 7 and FIG. 8, a battery is provided in the present embodiment, including the internal connection structure of the battery terminal as defined above. The battery terminal 4 connects with the inner side of the battery by the internal connection structure of the battery terminal. The internal connection structure of the battery terminal enables the first current collector 2 to be connected to the battery terminal 4 by snapping to realize electrical connection, which is convenient and reliable, and improves the safety of the battery.

The battery also includes a battery case 5, the battery terminal 4, and a second current collector 8. A terminal insulating part 6 and an internal insulating part 7 are disposed between the battery terminal 4 and the battery case 5. The terminal insulating part 6 is located outside the battery case 5. The internal insulating part 7 is located inside the battery case 5. The battery terminal 4 is configured to enable the positive end of the roll core 1 extend outwards. The second current collector 8 is connected to the second electrode tab 12 and an inner side of the battery case 5 respectively. The battery case 5 is configured to enable a negative end of the roll core 1 extend outwards. An external of the battery terminal 4 is a positive output pole, and another part of the battery case 5 except the battery terminal 4 and the terminal insulating part 6 is a negative output pole. Therefore, a same-side output tab structure of the positive and negative poles of the battery is realized.

As shown in FIG. 7 and FIG. 8, the first pole post 41 passes through a through hole defined on an end of the battery case 5. The terminal insulating part 6 inserts into the through hole to strengthen an insulation effect between the battery terminal 4 and the battery case 5. The internal insulating part 7 inserts into the through hole and is disposed between the terminal insulating part 6 and an inner wall of the through hole to strengthen the insulation effect between the battery terminal 4 and the battery case 5. The terminal insulating part 6 and the internal insulating part 7 form double protective insulation for the battery terminal 4 at the through hole of the battery case 5. An inner side of the first pole post 41 is disposed with a riveting flange 9. An inner wall of the riveting flange 9 near a center of the first pole post 41 is inclined, so that the inner wall of the riveting flange 9 is open. The first pole post 41 is provided with a riveting turnover groove 411 adjacent to the riveting flange 9. The riveting turnover groove 411 is located on a side of the riveting flange 9 close to the center of the first pole post 41, and the riveting turnover groove 411 makes the riveting flange 9 easier to bend outwards to form a riveting structure after being stressed. The battery terminal 4 passes through the through hole of the battery case 5 via the riveting flange 9 and is riveted and assembled with the battery case 5. The riveting flange 9 is pressed on a surface of the internal insulating part 7 after riveted and folded, so as to realize a connection between the battery terminal 4 and the battery case 5. The fixed and formed battery shell assembly is used as a battery container, and the connection is convenient and reliable.

In an embodiment, structural dimensions of the battery case 5 are defined as follows: a diameter code of the through hole of the battery case 5 is φ-11, a diameter code of the first pole post 41 is φ-12, and a diameter code of an outer insulating part below a positive pole post is φ-13. A value of φ-11 ranges from 3mm to 20mm, φ -12=( φ-11)+W0, φ-13=( φ-12)+W2. The value of Φ -11 ranges from 3mm to 20mm, φ-12=( φ-11)+W0, φ-13=( φ-12)+W2, wherein a value of W0 ranges fromlmm to15mm, and a value of W1 ranges from 0.8mm to 10mm.

In an embodiment, a diameter φ-01 of the riveting protrusion portion 31 of the battery terminal 4 ranges from 3mm to 8 mm. A wall thickness of the riveting protrusion portion 31 ranges from 0.1mm to 1 mm. A wall thickness of a flanging turned outwards after the riveting protruding portion 31 is riveted is t-02. The wall thickness t-02 of the flanging will be extension and thinning, a thickness range of t-02 is 0.80≤t-01/t-02<1. W01 is a flanging width of the riveting protruding portion 31, which requires 2-3 times of t-01, a diameter φ-02 of the riveting protruding portion 31 after flanging is φ-01+2×W01.

Design requirements for structural dimensions of the riveting protrusion portion 31 of the battery terminal 4, the diameter code of the through hole of the battery case 5 is φ-11, a diameter code of the first pole post 41 passing through the through hole of the battery terminal 4 is φ2-3, wherein a range of φ2-3 is ( φ -11)-W3, and a value of W3 ranges from 0.3mm to 3mm. Circular and annular riveting turnover groove 411 is disposed on the inner side of battery terminal 4, and an inner diameter code of the riveting turnover groove 411 is φ2-1. An outer code of the riveting turnover groove 411 is φ2-2, wherein a range of φ2-2 is ( φ2-3)-W4, a value of W4 ranges from 0.3mm to 3mm. The range of φ2-1 is ( φ 2-2)-W5, a value of W5 ranges from 0.3mm to 3mm, and ( φ2-1)>5mm. A diameter code of the riveting flange 9 inside the battery terminal 4 after riveting is φ2-4. The range of φ 2-4 is ( φ-11)+G1, and a value of G1 ranges from 0.8mm to 5mm. A diameter code of the internal insulating part 7 is φ2-5, a range of φ2-5 is ( φ-11+G1)+G2, and a value of G2 ranges from 0.5mm to 25mm, and the value of G2 does not exceed φ 1-t-01. A concave hole 43 is defined outside the battery terminal 4. A diameter code of the concave hole 43 is φ2-0, wherein a value of the φ2-0 ranges from 0.5mm to 15mm.

Implementation principle of the internal connection structure of the battery in this embodiment is introduced below: the first current collector 2 is connected to the battery terminal 4 by riveting and snapping to achieve electrical connection in the internal connection structure of the battery terminal. This does not need to use laser welding or resistance welding to achieve electrical connection inside the battery terminal 4, so as to avoid internal short circuit or excessive self-discharge of the battery caused by spatter and metals welded inside the battery. The connection is convenient and reliable, and the use safety of the battery is improved. The external of the battery terminal 4 is the positive output pole, and another part of the battery case 5 except the battery terminal 4 and the terminal insulating part 6 is the negative output pole. Therefore, the same-side output tab structure of the positive and negative poles of the battery is realized.

### A third embodiment:

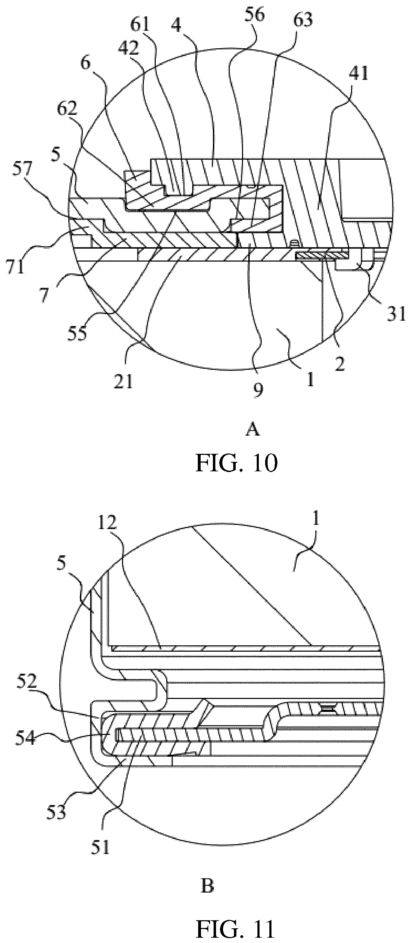

A battery is provided in this embodiment. A difference from the second embodiment is that, as shown in FIG. 9 and FIG. 10 , in order to increase stability of a connection between the battery terminal 4 and the terminal insulating part 6, a first connecting bump 42 is disposed on the battery terminal 4, and a first connecting groove 61 for the first connection bump 42 to insert into is provided at a corresponding position of the terminal insulating part 6. In order to increase stability of a connection between the terminal insulating part 6 and the battery case 5, a second connecting bump 62 is disposed on the terminal insulating part 6, and a second connecting groove 55 for the second connection bump 62 to insert into is provided at a corresponding position of the battery case 5. In order to increase an insulating effect of the terminal insulating part 6, the terminal insulating part 6 inserts into the through hole of the battery case 5, and a buckling portion 63 extending in a direction away from a center of the battery terminal 4 is provided. A buckling groove 56 for the buckling part 63 to insert into is disposed at a corresponding position on the inner wall of the battery case 5.

In an embodiment, the inner wall of the battery case 5 is provided with a third connecting groove 57, and the internal insulating part 7 is provided with a third connecting bump 71 inserting into the third connecting groove 57. This makes a connection between the internal insulating part 7 and the battery case 5 more stable. After the riveting flange 9 folds outwards, a side wall of the riveting flange 9 abuts against the inner wall of the internal insulating part 7. And a side of the riveting flange 9 away from the center of the battery abuts against the buckling portion 63 of the terminal insulating part 6.

A positive insulating part 21 is disposed between the internal insulating part 7 and the roll core 1. A side of the positive insulating part 21 away from the center of the battery abuts against the riveting flange 9 and extends between the first current collector 2 and the first pole post 41.

As shown in FIG. 9 and FIG. 11, an end of the battery case 5 away from the battery terminal 4 is provided with an opening, and a cover plate 51 is disposed at a position of the opening. A sealing ring 54 is disposed at a gap between the cover plate 51 and the opening. An internal wall of the opening extends toward outside of the battery case 5 with a supporting portion 52. The supporting portion 52 is configured to support the cover plate 51. The supporting portion 52 is connected to a crimping portion 53, and the crimping portion 53 is configured to press the cover plate 51 on the supporting portion 52. The sealing ring 54 is also located between the crimping portion 53 and the supporting portion 52. The sealing ring 54 strengthens sealing between the cover plate 51 and the battery case 5. The cover plate 51 is provided with an explosion-proof valve body structure 511, and the explosion-proof valve body structure 511 is coaxial with the battery.

In an embodiment, the supporting portion 52 is realized by rolling a position 8-14mm from a lower edge of the opening of the battery case 5, and then the sealing ring 54 and the cover plate 51 are placed on the supporting portion 52. The crimping portion 53 is formed by crimping a position 3-6 mm from the lower edge of the opening of the battery case 5, so that the crimping portion 53 and the supporting portion 52 compress the sealing ring 54 and the cover plate 51 to form a seal and complete battery packaging. The cover plate 51 and the battery case 5 are insulated by the sealing ring 54 . The cover plate 51 is in contact with the protrusion portion of the second current collector 8, therefore, the cover plate 51 is negatively charged.

Implementation principle of the battery in this embodiment is introduced below: this battery provides a type of sealing structure in which the positive pole is integrated in the battery case 5. Through a cooperative use of the crimping portion 53 and the supporting portion 52, the cover plate 51 and the sealing ring 54 are assembled on the battery case 5 to form the seal and complete the battery packaging. The packaging is convenient, the connection is reliable, and the use safety and production efficiency of the battery are improved.

### A fourth embodiment:

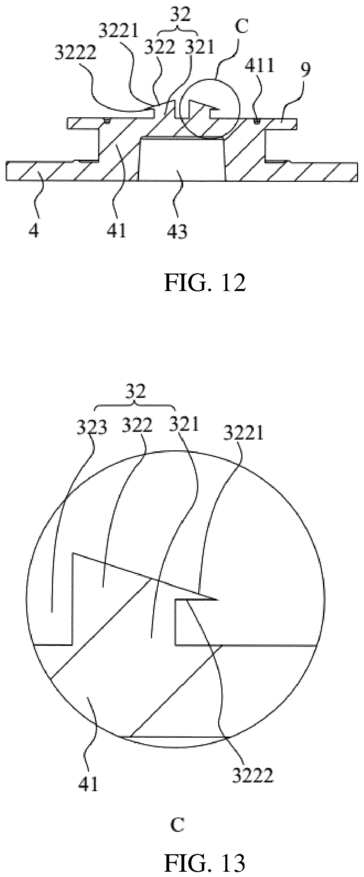

This embodiment provides a battery, as shown in FIG. 12 and FIG. 13, a difference from the first embodiment is that, the snapping portion 3 includes a snapping protrusion portion 32. The snapping protrusion portion 32 is disposed on an end face of the first pole post 41. In an embodiment, the snapping protrusion portion 32 includes a first snapping protrusion 321 and a second snapping protrusion 322. A first end of the first snapping protrusion 321 is fixedly connected to the inner side of the battery terminal 4. A second end of the first snapping protrusion 321 is fixedly connected to the second snapping protrusion 322. An end face of the second snapping protrusion 322 away from the battery terminal 4 is an aligning inclined surface 3221. An end face of the second snapping protrusion 322 close to the battery terminal is a snapping surface 3222. The snapping surface 3222 abuts against the first current collector 2. An end face of the snapping protrusion portion 32 away from the battery terminal 4 is provided with an elastic deformation groove 323.

In this embodiment, the snapping protrusion portion 32 is snapped through the open pole, the second snapping protrusion 322 is close to a center of the elastic deformation groove 323 of the snapping protrusion portion 32 under an action of an external force. The guide surface has a guiding role until the battery terminal 4 passes through the through hole by the snapping protrusion 32 and is snapped and assembled with the first current collector 2. The snapping surface 3222 abuts against the end face of the first current collector 2. A distance between the snapping surface 3222 and an internal measuring end face of the battery terminal 4 is approximately the same as a thickness of the first current collector 2, which can better clamp the first current collector 2 between the inner end face of the battery terminal 4 and the snapping surface 3222, so as to play a role of stable electrical connection. The battery terminal 4 can realize outwards stable output of the positive end of the roll core 1.

Implementation principle of the internal connection structure of the battery terminal in this embodiment is introduced below: the hole in the middle of the first current collector 2 of the roll core 1 is assembled with the snapping portion 32 on the inner side of the battery terminal 4. The first current collector 2 is connected to the battery terminal 4 by clamping to achieve electrical connection. This does not need to use laser welding or resistance welding to achieve electrical connection inside the battery terminal 4, so as to avoid internal short circuit or excessive self-discharge of the battery caused by spatter and metals welded inside the battery. The connection is convenient and reliable, and the use safety of the battery is improved.

## Claims

1. An internal connection structure of a battery terminal, comprising:
a roll core (1), wherein the roll core (1) is provided with a first electrode tab (11) and a second electrode tab (12);
a first current collector (2), wherein the first current collector (2) is connected to the first electrode tab (11), and the first current collector (2) is provided with a hole; and
a snapping portion (3), wherein the snapping portion (3) is disposed on an inner side of the battery terminal (4), the snapping portion (3) passes through the hole and is snapped with the hole, the battery terminal (4) passes through the hole and is snapped and assembled with the first current collector (2) via the snapping portion (3), and the battery terminal (4) is configured to enable a positive end of the roll core (1) extend outwards.

2. The internal connection structure of the battery terminal according to claim 1, wherein the snapping portion (3) comprises a riveting protrusion portion (31).

3. The internal connection structure of the battery terminal according to claim 2, wherein the riveting protrusion portion (31) is disposed with a riveting notch (312), and the riveting notch (312) is configured to separate the riveting protrusion portion (31) into a plurality of independent riveting protrusions (311).

4. The internal connection structure of the battery terminal according to claim 1, wherein the snapping portion (3) comprises a snapping protrusion portion (32).

5. The internal connection structure of the battery terminal according to claim 4, wherein the snapping protrusion portion comprises a first snapping protrusion (321) and a second snapping protrusion (322), a first end of the first snapping protrusion (321) is fixedly connected to the inner side of the battery terminal (4), and a second end of the first snapping protrusion (321) is fixedly connected to the second snapping protrusion (322), an end face of the second snapping protrusion (322) away from the battery terminal (4) is an aligning inclined surface (3221), an end face of the second snapping protrusion (322) close to the battery terminal (4) is a snapping surface (3222), and the snapping surface (3222) abuts against the first current collector (2).

6. The internal connection structure of the battery terminal according to claim 5, wherein a distance between the snapping surface (3222) and an inner end face of the battery terminal (4) is approximately the same as a thickness of the first current collector (2).

7. The internal connection structure of the battery terminal according to any one of claims 4-6, wherein an end face of the snapping protrusion portion (32) away from the battery terminal (4) is provided with an elastic deformation groove (323).

8. A battery, comprising the internal connection structure of the battery terminal as described in any one of claims 1-7.

9. The battery according to claim 8, further comprising:
a battery case (5);
the battery terminal (4);
a terminal insulating part (6) and an internal insulating part (7) disposed between the battery terminal (4) and the battery case (5), wherein the terminal insulating part (6) is located outside the battery case (5), the internal insulating part (7) is located inside the battery case (5), the battery terminal (4) is connected to the internal connection structure of the battery terminal, and the battery terminal (4) is configured to enable the positive end of the roll core (1) extend outwards; and
a second current collector (8), wherein the second current collector (8) is connected to a second electrode tab (12) and an inner part of the battery case (5) respectively, and the battery case (5) is configured to enable a negative end of the roll core (1) extend outwards.

10. The battery according to claim 9, wherein the battery terminal (4) comprises a first pole post (41) configured to pass through a through hole disposed at an end of the battery case (5);
an inner side of the first pole post (41) is provided with a riveting flange (9), and the battery terminal (4) is configured to pass through the through hole and to be riveted and assembled with the battery case (5) via the riveting flange (9) to fix the first terminal (4) with the battery case (5).

11. The battery according to claim 10, wherein the first pole post (41) is provided with a riveting turnover groove (411) adjacent to the riveting flange (9), and the riveting turnover groove (411) is located at a side of the riveting flange (9) close to a center of the first pole post (41).

12. The battery according to any one of claims 9-10, further comprising a cover plate (51), wherein an end of the battery case (5) away from the battery terminal (4) is provided with an opening, and the cover plate (51) is disposed at a position of the opening.

13. The battery according to claim 12, wherein an internal wall of the opening extends toward outside of the battery case (5) to form a supporting portion (52), the supporting portion (52) is configured to support the cover plate (51), the supporting portion (52) is connected to a crimping portion (53), and the crimping portion (53) is configured to press the cover plate (51) on the supporting portion (52).

14. The battery according to claim 12, further comprising a sealing ring (54) disposed at a gap between the cover plate (51) and the opening.

15. The battery according to claim 12, wherein the cover plate (51) is provided with an explosion-proof valve body structure (511), and the explosion-proof valve body structure (511) is coaxial with the battery.
